# EUROPÄISCHE PATENTANMELDUNG

(11) **EP 1 760 853 A1**
(43) Veröffentlichungstag der Anmeldung: **07.03.2007**
(21) Anmeldenummer: 06119967.5
(22) Anmeldetag: 01.09.2006
(51) Int. Cl.: H02B 1/21

(54) **Vorrichtung zum Befestigen eines Sicherungslasttrennschalters an einer Sammelschiene**

(30) Priorität: 05.09.2005 DE 102005042745
(71) Anmelder: SIEMENS AKTIENGESELLSCHAFT, 80333 München (DE)
(72) Erfinder: Donner, Steffen, 16727, Bötzow (DE); Gnoerrlich, Uwe, 12621, Berlin (DE); Losch, Stefan, 13595, Berlin (DE); Schmidt, Detlev, 12055, Berlin (DE); Strubich, Petra, 14656, Brieselang (DE); Türkmen, Sezai, 13629, Berlin (DE)

(57) **Zusammenfassung**

Zur flexiblen Anpassung eines Sicherungslasttrennschalters an einer Sammelschiene ist dieser mit einer erfindungsgemäßen Vorrichtung versehen. Diese weist zumindest ein Klemmelement (14) und eine Befestigungsplatte (10) auf, die zu jedem Klemmelement eine Mehrzahl von Aufnahmen (12, 12') aufweist. Das Klemmelement ist zur Lagerung in jede der Aufnahmen steckbar und kann zur Anpassung an wechselnde Befestigungssituationen umgesteckt werden.

## Beschreibung

Die Erfindung betrifft eine Vorrichtung zum Befestigen eines Sicherungslasttrennschalters an einer Sammelschiene.

Aus dem Stand der Technik sind zum Befestigen von Sicherungslasttrennschaltern an einer Sammelschiene verschiedene Hakensysteme bekannt. Die Sicherungslasttrennschalter werden mit den Haken üblicherweise auf die Sammelschienen aufgesetzt. Ein Problem des Standes der Technik ist die mangelnde Flexibilität der Haken. Die Sammelschienen können unterschiedliche Abstände haben, sie können auch verschieden dick sein. Schließlich kann auch eine wechselnde Orientierung des Sicherungslasttrennschalters gewünscht sein, einmal kann die Einspeisung - bezogen auf den Sicherungslasttrennschalter - von oben erfolgen, ein anderes Mal von unten.

Aus der EP 1 271 727 A1 ist ein drehbarer Haken zur Befestigung eines Sicherungslasttrennschalters an einer Sammelschiene bekannt. Die Vorrichtung ist durch die Drehung des Hakens an wechselnde Orientierungen des Sicherungslasttrennschalters anpassbar. Der Haken befindet sich in einer Aufnahme und wird dort gedreht, er verlässt die Aufnahme nie. Das System ist insgesamt inflexibel und auch nur für einen bestimmten Sammelschienenabstand geeignet.

Es ist Aufgabe der Erfindung, die Befestigung eines Sicherungslasttrennschalters für Sammelschienensysteme flexibler zu gestalten, so dass mit ein und derselben Vorrichtung eine Mehrzahl von Befestigungssituationen erfasst werden kann, d.h. dass eine Anpassung an wechselnde Sammelschienenanordnungen inklusive unterschiedliche Sammelschienendicken oder an wechselnde Orientierungen des Sicherungslasttrennschalters bei einem Wechsel der Einspeiseseite und der Abgangsseite ermöglicht wird.

Erfindungsgemäß wird eine Vorrichtung nach Patentanspruch 1 und eine Befestigungsplatte nach Patentanspruch 7 bereitgestellt.

Die erfindungsgemäße Vorrichtung zum Befestigen eines Sicherungslasttrennschalters an einer Sammelschiene umfasst zumindest ein Klemmelement und eine Befestigungsplatte, die zu jedem Klemmelement eine Mehrzahl von Aufnahmen aufweist. Befestigungsplatte im Sinne dieser Anmeldung ist insbesondere auch eine Wand aus einem quaderförmigen Element. Der Anwendungsfall ist eine Rückwand eines Sicherungslasttrennschalters. Es kann bei der Erfindung zwischen den Aufnahmen gewechselt werden, und zwar ist das Klemmelement zur Lagerung in jede der Aufnahmen steckbar, wobei es zur Anpassung an wechselnde Befestigungssituationen, also wechselnde Sammelschienenanordnungen oder wechselnde Orientierungen des Sicherungslasttrennschalters, in eine der (anderen) Aufnahmen umgesteckt werden kann.

Durch den Wechsel von einer Aufnahme zur anderen Aufnahme kann der Sicherungslasttrennschalter, der mit der Vorrichtung versehen ist, an die jeweilige Sammelschienenanordnung und auch die gewünschte Orientierung des Sicherungslasttrennschalters, also auch an Einspeiseseite unten oder oben und Abgangsseite oben bzw. unten, angepasst werden. Es muss dann nur noch einzige Art von Sicherungslasttrennschalter mit der erfindungsgemäßen Vorrichtung auf Lager gehalten werden, er kann universell in verschiedenen Befestigungssituationen eingesetzt werden. Der Umbau ist relativ einfach, das Klemmelement muss lediglich aus der einen Aufnahme herausgezogen und in die nächste hineingesteckt werden.

Bei einer bevorzugten Ausführungsform sind zwei verschiedene Aufnahmen verschieden tief, so dass das Klemmelement zur Anpassung an unterschiedliche Sammelschienendicken verschieden tief in die Befestigungsplatte hineingesteckt werden kann. Durch die Bereitstellung verschiedener Tiefen verdoppelt sich die Zahl der möglichen Aufnahmen. Durch die Anpassung an zwei verschiedene Sammelschienenabstände kann (muss aber nicht) sich die Zahl der möglichen Aufnahmen ebenfalls verdoppeln. Durch die Anpassung an zwei verschiedene Orientierungen des Lasttrennschalters, einmal mit der Einspeiseseite unten und der Abgangsseite oben und ein anderes Mal mit der Abgangsseite unten und der Einspeiseseite oben, verdoppelt sich die Anzahl der möglichen Aufnahmen ebenfalls. Es ergeben sich somit acht mögliche Aufnahmen. Eine bevorzugte Anordnung der Aufnahmen ist symmetrisch. Die Aufnahmen sind bevorzugt bezüglich zumindest einer Symmetrieachse symmetrisch angeordnet. Bevorzugt sind sie sogar bezüglich zweier Symmetrieachsen symmetrisch angeordnet, die im Idealfall senkrecht aufeinander stehen. Stehen beide Symmetrieachsen senkrecht aufeinander, ergibt sich eine Drehsymmetrie, die insbesondere bezüglich der Anpassung an wechselnde Orientierungen des Sicherungslasttrennschalters relevant ist.

Bei einer bevorzugten Ausführungsform umfasst jedes Klemmelement einen Befestigungsstift, mit dem es in eine Aufnahme einsteckbar ist, sowie eine senkrecht zu dem Befestigungsstift verlaufende Klemmfläche, die im eingesteckten Zustand des Klemmelements bei Befestigung der Vorrichtung an einer Sammelschiene Druck gegen die Sammelschiene ausübt und dadurch die eigentliche Klemmung hervorruft. Ein solches Klemmelement ist besonders einfach gebaut und kommt der im Stand der Technik verwendeten Form nahe, wobei jedoch durch das Einstecken des Befestigungsstifts der Druck gegen die Sammelschiene verschieden stark, also variabel, sein kann, was die Befestigung erleichtert.

Bei einer bevorzugten Ausführungsform umfasst jedes Klemmelement zusätzlich zu dem Befestigungsstift einen Stützstift, der das Klemmelement vor einer Verdrehung schützt, wenn er in einer Aufnahme der Befestigungsplatte eingesteckt ist. Der Stützstift stützt also das gesamte Klemmelement ab und stabilisiert es dadurch. Bevorzugt ist jeder Stützstift in jeder Befestigungssituation in einer Aufnahme gehalten, d.h. bevorzugt umfasst die Befestigungsplatte zu jeder Aufnahme für den Befestigungsstift eine Aufnahme für den Stützstift.

Gegebenenfalls kann eine der Aufnahmen als Schlitz oder Langloch ausgeführt sein und nicht als einfache Bohrung, wobei dann das Langloch in verschiedenen Befestigungssituationen eine unterschiedliche Rolle spielt.

Die erfindungsgemäße Befestigungsplatte ist auf einer Unterseite zur Befestigung an der Rückseite eines Sicherungslasttrennschalters und auf einer Oberseite zur Anbringung an eine Sammelschiene ausgelegt und ist durch eine Mehrzahl von Aufnahmen auf der Oberseite gekennzeichnet, die dem Einstecken von Klemmelementen passend zu einer Mehrzahl von Sammelschienenanordnungen und Orientierungen des Sicherungslasttrennschalters dienen.

Die Aufnahmen können auch hier symmetrisch angeordnet sein.

Die Erfindung betrifft auch einen Sicherungslasttrennschalter mit einer Befestigungsplatte der oben erwähnten Art (als Rückwand), oder, falls zusätzlich die Klemmelemente bereitgestellt werden, mit einer Vorrichtung in der oben beschriebenen Art.

Es wird nun eine bevorzugte Ausführungsform der Erfindung unter Bezug auf die Zeichnung beschrieben. Die Figuren zeigen jeweils dieselbe erfindungsgemäße Vorrichtung aus Befestigungsklemmplatte und Klemmelementen in verschiedenen Befestigungssituationen, nämlich für beliebige Kombinationen aus zwei verschiedenen Sammelschienenabständen, zwei verschiedenen Schienendicken und zwei verschiedenen Orientierungen des Sicherungslasttrennschalters.
- FIG 1: zeigt die Situation, bei der die Einspeiseseite unten ist und die Abgangsseite oben ist, und in der die Schienendicke 10 mm, der Sammelschienenabstand 60 mm beträgt.
- FIG 2: zeigt die Situation, in der die Einspeiseseite unten ist und die Abgangseite oben ist, und in der die Schienendicke 10 mm und der Sammelschienenabstand 40 mm beträgt.
- FIG 3: zeigt die Situation, in der die Einspeiseseite oben ist und die Abgangseite unten ist, und in der die Schienendicke 10 mm und der Sammelschienenabstand 60 mm beträgt.
- FIG 4: zeigt die Situation, in der die Einspeiseseite oben ist und die Abgangseite unten ist, und in der die Schienendicke 10 mm und der Sammelschienenabstand 40 mm beträgt.
- FIG 5: zeigt die Situation, in der die Einspeiseseite oben ist und die Abgangseite unten ist, und in der die Schienendicke 5 mm und der Sammelschienenabstand 40 mm beträgt.
- FIG 6: zeigt die Situation, in der die Einspeiseseite oben ist und die Abgangseite unten ist, und in der die Schienendicke 5 mm und der Sammelschienenabstand 60 mm beträgt.
- FIG 7: zeigt die Situation, in der die Einspeiseseite unten ist und die Abgangseite oben ist, und in der die Schienendicke 5 mm und der Sammelschienenabstand 40 mm beträgt.
- FIG 8: zeigt die Situation, in der die Einspeiseseite unten ist und die Abgangseite oben ist, und in der die Schienendicke 5 mm und der Sammelschienenabstand 40 mm beträgt.

Die in den Figuren gezeigte Vorrichtung umfasst eine Befestigungsplatte 10. Die Platte 10 stellt die Rückseite einer Basis eines Sicherungslasttrennschalters dar. An der Befestigungsplatte sind drei Bereiche mit Aufnahmen 12 (bzw. 12') vorgesehen, in die Klemmelemente 14 eingesteckt sind. Die Bereiche mit den Aufnahmen 12 umfassen Metallplättchen 16, welche die Anschlussflächen der inneren Schienen 18 darstellen. In den Plättchen und in der Platte sind die Aufnahmen 12, 12' als Bohrungen verschiedener Tiefe ausgebildet.

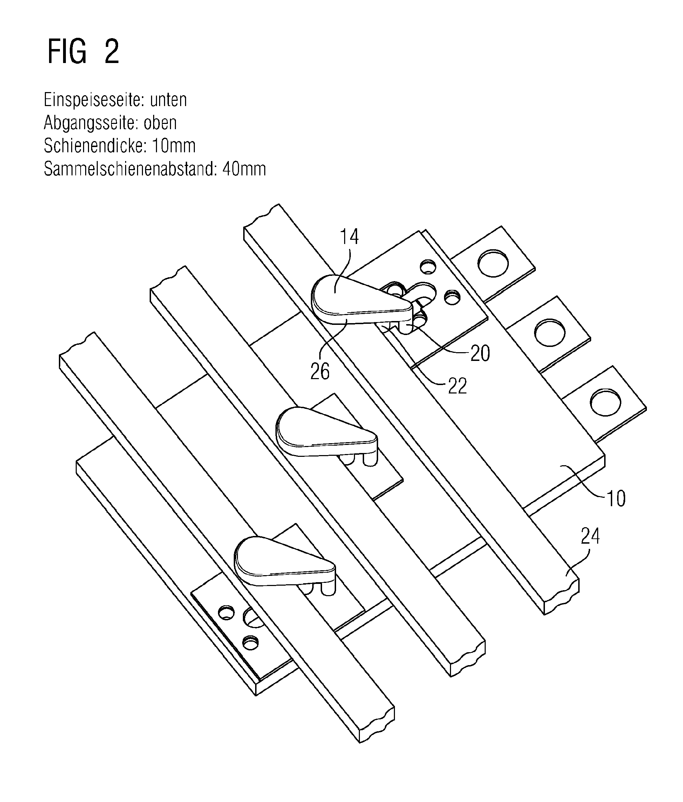

Die Klemmelemente 14 umfassen, wie an den Klemmelementen in FIG 2 besonders gut zu sehen, einen Stützstift 20 und einen Befestigungsstift 22. Der eigentliche Halt an den Sammelschienen 24 wird durch Klemmung geschaffen. Eine Klemmfläche 26 an dem Klemmelement 14, d.h. ein flacher Abschnitt, erzeugt dann aufgrund der Zugspannung an dem Befestigungsstift 22 und der Druckspannung auf dem Stützstift 20 in den zugehörige Aufnahmen 12 die eigentliche Klemmung zwischen der Anschlussfläche 16 und den äußeren Sammelschienen 24, die sich zwischen Klemmfläche 26 und interner Stromschiene befindet.

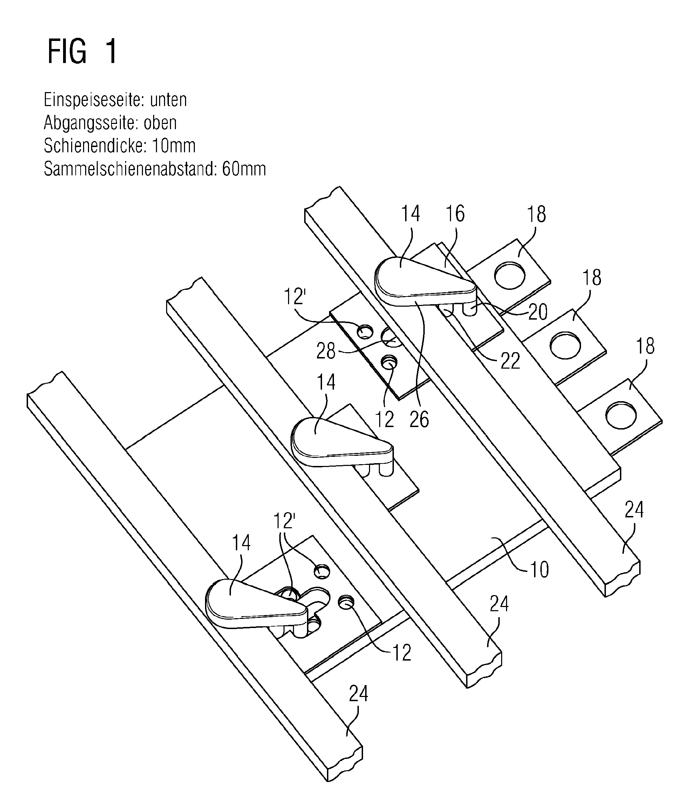

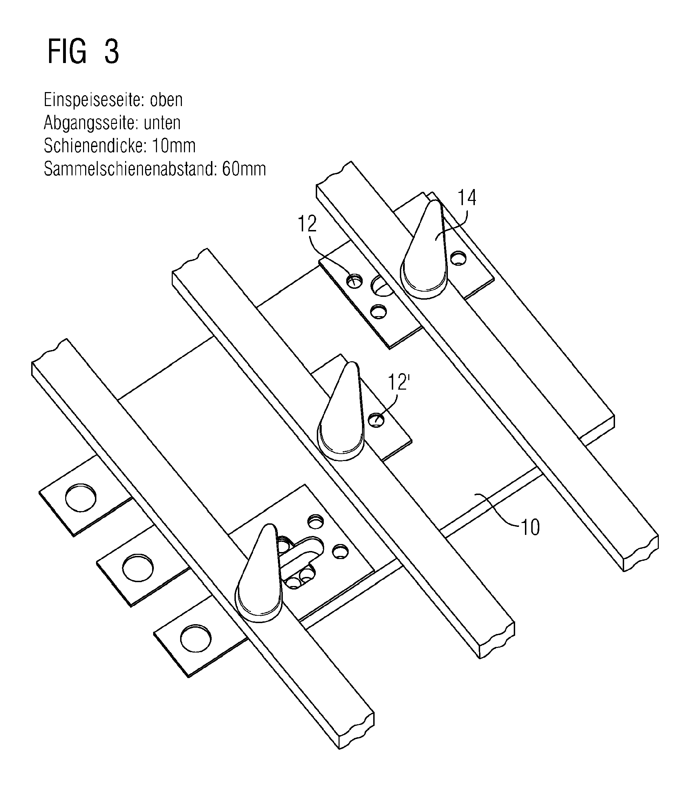

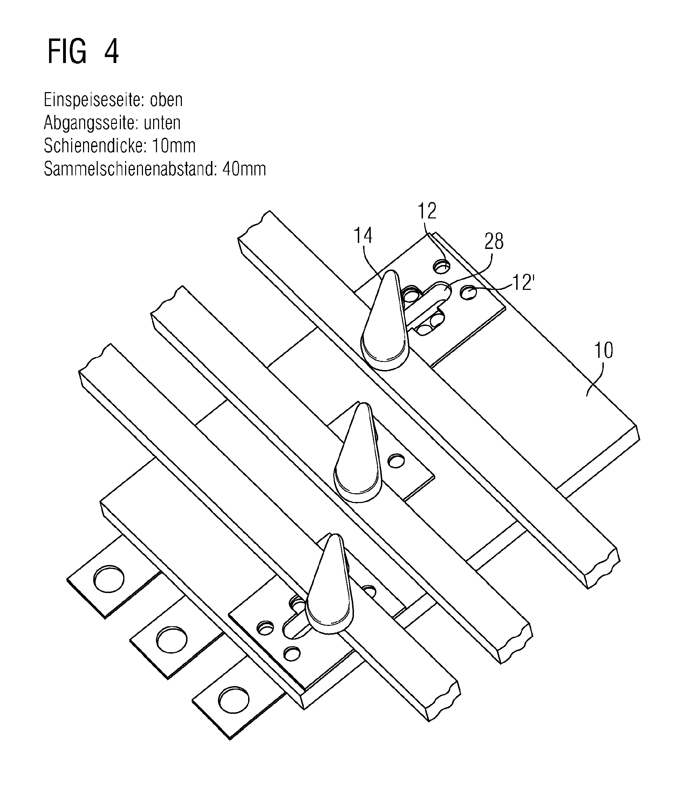

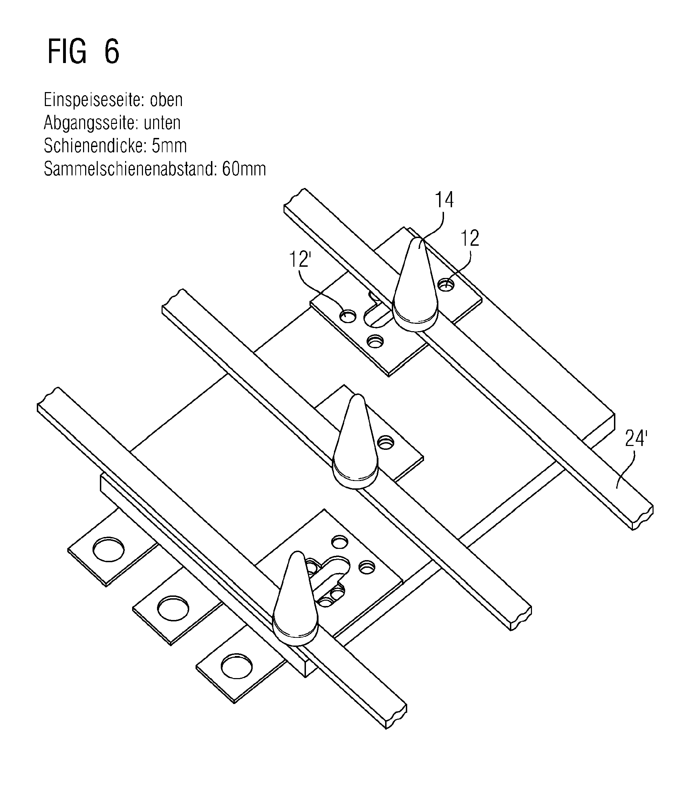

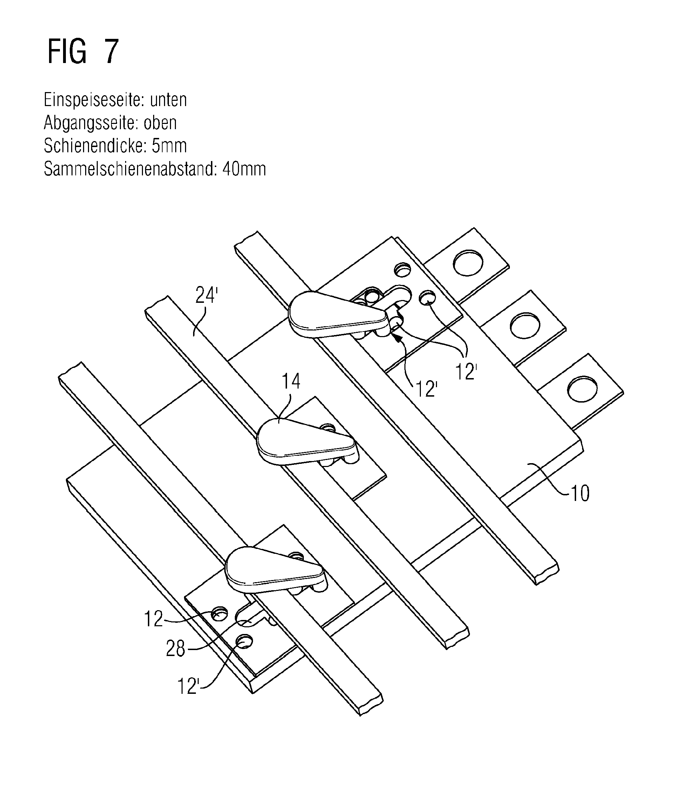

Die Zahl der Aufnahmen 12 bzw. 12' ist durch die Zahl der Befestigungssituationen definiert. Für den Stützstift 20 stehen acht verschiedene Aufnahmen zur Verfügung. Wie ein Vergleich der Figuren 1 bis 8 ergibt, wird jede der Aufnahmen mit Ausnahme des in FIG 4 besonders gut zu sehenden zentralen Schlitzes 28 jeweils einmal für den Befestigungsstift 22 verwendet. Der Stützstift 20 ist dabei jeweils in eine andere der Aufnahmen hineingesteckt.

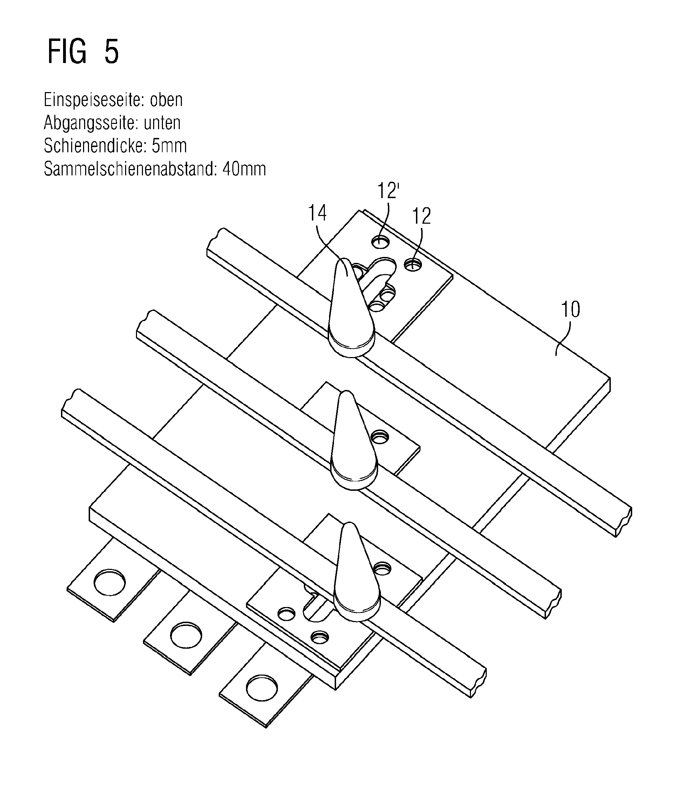

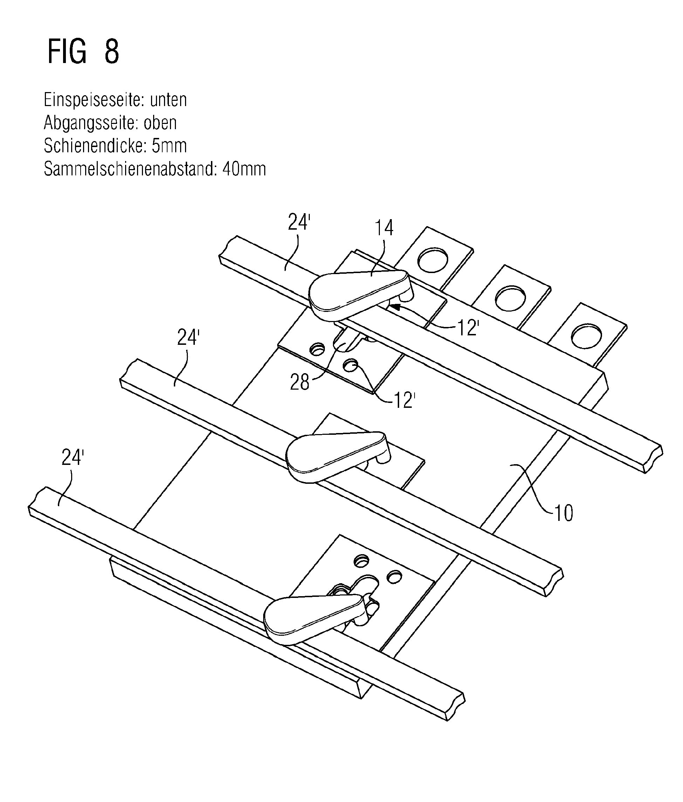

Die in FIG 1 mit 12' bezeichneten Aufnahmen sind tiefer als die Aufnahmen 12. Während in den Figuren 1 bis 4 jeweils Aufnahmen 12 zur Lagerung des Stützstifts 20 dienen, dienen in den Figuren 5 bis 8 jeweils Aufnahmen 12' zur Lagerung des Stützstifts 20. Grund ist, dass diese tieferen Aufnahmen 12' dann eine Rolle spielen, wenn eine geringere Schienendicke verwendet wird, und wenn somit das Klemmelement 14 tiefer in die entsprechenden Aufnahmen 12' eingeführt werden muss, damit eine Klemmung mit den Sammelschienen 24', welche nur 5 mm dick sind, möglich wird (vgl. die Figuren 5 bis 8, insbesondere FIG 8).

Durch eine einfache Maßnahme, wie das Bereitstellen von verschiedenen Aufnahmen 12 bzw. 12' für verschiedene Befestigungssituationen, kann ein und dasselbe Klemmelement 14 in verschiedenen Befestigungssituationen verwendet werden. Ein Sicherungslasttrennschalter, der an seiner Rückseite mit einer Befestigungsplatte 10 versehen ist, ist somit flexibel an alle möglichen Befestigungssituationen anpassbar, und die Lagerhaltung von verschiedenen Sicherungslasttrennschaltern für verschiedene Befestigungssituationen entfällt.

### Bezugszeichenliste

- 10: Befestigungsplatte
- 12, 12': Aufnahme
- 14: Klemmelement
- 16: Metallplättchen
- 18: innere Schiene
- 20: Stützstift
- 22: Befestigungsstift
- 24, 24': Sammelschiene
- 26: Klemmfläche
- 28: zentraler Schlitz

## Patentansprüche

1. Vorrichtung zum Befestigen eines Sicherungslasttrennschalters an eine Sammelschiene (24, 24') mit:
- zumindest einem Klemmelement (14) und
- einer Befestigungsplatte (10), die zu jedem Klemmelement (14) eine Mehrzahl von Aufnahmen (12, 12') aufweist,
wobei das Klemmelement (14) zur Lagerung in jede der Aufnahmen (12, 12') gesteckt werden kann und zur Anpassung an wechselnde Sammelschienenanordnungen oder wechselnde Orientierungen des Sicherungslasttrennschalters in eine andere Aufnahme umgesteckt werden kann.

2. Vorrichtung nach Anspruch 1,
**dadurch gekennzeichnet,**
**dass** zumindest zwei Aufnahmen (12, 12') verschieden tief sind, so dass das Klemmelement (14) zur Anpassung an unterschiedliche Sammelschienendicken verschieden tief in die Befestigungsplatte (10) gesteckt werden kann.

3. Vorrichtung nach Anspruch 1 oder 2,
**dadurch gekennzeichnet,**
**dass** die Aufnahmen (12, 12') bezüglich zumindest einer Symmetrieachse, bevorzugt bezüglich zweier senkrecht zueinander stehenden Symmetrieachsen symmetrisch angeordnet sind.

4. Vorrichtung nach einem der vorhergehenden Ansprüche,
**dadurch gekennzeichnet,**
**dass** jedes Klemmelement (14) einen Befestigungsstift (22) umfasst, mit dem es in eine Aufnahme (28) einsteckbar ist, sowie eine senkrecht zu dem Befestigungsstift (22) verlaufende Klemmfläche (26), die im eingesteckten Zustand des Klemmelements (14) bei Befestigung der Vorrichtung an einer Sammelschiene (24, 24') Druck gegen die Sammelschiene ausübt und die Klemmung hervorruft.

5. Vorrichtung nach Anspruch 4,
**dadurch gekennzeichnet,**
**dass** jedes Klemmelement (14) einen Stützstift (20) umfasst, der das Klemmelement (14) vor einer Verdrehung schützt, wenn es in eine Aufnahme (12, 12') in der Befestigungsplatte (10) eingesteckt ist.

6. Vorrichtung nach Anspruch 5,
**dadurch gekennzeichnet,**
**dass** die Befestigungsplatte (10) zu jeder Aufnahme (28) für den Befestigungsstift eine Aufnahme (12, 12', 28) für den Stützstift aufweist.

7. Befestigungsplatte, die auf einer Unterseite zur Befestigung an der Rückseite eines Sicherungslasttrennschalters und auf einer Oberseite zur Anbringung an eine Sammelschiene (24, 24') ausgelegt ist,
**gekennzeichnet durch**
eine Mehrzahl von Aufnahmen (12, 12') auf der Oberseite, die dem Einstecken von Klemmelementen (14) zu einer Mehrzahl von Sammelschienenanordnungen und Orientierungen des Sicherungslasttrennschalters dienen.

8. Befestigungsplatte nach Anspruch 7, mit symmetrisch angeordneten Aufnahmen (12, 12').

9. Befestigungsplatte nach Anspruch 8 mit acht Aufnahmen (12, 12') für einen Stützstift eines Klemmelements sowie mit einem Schlitz (28) zur Aufnahme eines Befestigungsstifts eines Klemmelements.

10. Sicherungslasttrennschalter mit einer Befestigungsplatte (10) nach einem der Ansprüche 7 bis 9.

11. Sicherungslasttrennschalter mit einer Vorrichtung nach einem der Ansprüche 1 bis 6.
